# FASCICULE DE BREVET EUROPEEN

(11) **EP 1 814 752 B1**
(45) Date de publication et mention de la délivrance du brevet: **02.04.2008**
(21) Numéro de dépôt: 05815078.0
(22) Date de dépôt: 27.10.2005
(51) Int. Cl.: B60H 1/34

(54) **AERATEUR DE SYSTEME DE VENTILATION DE L'HABITACLE D'UN VEHICULE**
VENTILATORKLAPPE FÜR EIN VENTILATIONSSYSTEM IN EINER FAHRZEUGKABINE
VENTILATOR FLAP FOR A VENTILATION SYSTEM IN A VEHICLE CABIN

(30) Priorité: 03.11.2004 FR 0411729
(43) Date de publication de la demande: 08.08.2007
(73) Titulaire: Faurecia Interieur Industrie, 92000 Nanterre (FR)
(72) Inventeur: GUERREIRO, Pierre, 95600 EAUBONNE (FR)
(74) Mandataire: Blot, Philippe Robert Emile
(86) Numéro de dépôt international: PCT/FR2005/002701
(87) Numéro de publication internationale: WO 2006/048538

(56) Documents cités:
- EP-A- 1 344 668
- DE-A1- 3 939 418
- FR-A- 2 710 880
- SU-A1- 796 457
- US-A1- 2004 033 776

## Description

L'invention concerne l'industrie automobile, et plus précisément les dispositifs d'injection d'air dans l'habitacle, constituant la partie terminale des systèmes de chauffage, ventilation et climatisation des véhicules.

Dans les configurations les plus usuelles des systèmes de chauffage, ventilation et climatisation qui équipent les véhicules automobiles, les flux d'air injectés dans l'habitacle sont de deux sortes. Les flux destinés à pouvoir être orientés directement sur les occupants du véhicule pénètrent dans l'habitacle par des aérateurs fixes ou orientables. Les flux destinés à une diffusion indirecte dans l'habitacle y pénètrent à travers des grilles de diffusion douce totalement distinctes des aérateurs. Pour assurer les deux fonctions de diffusion directe et indirecte, on utilise donc deux classes différentes de moyens de diffusion, un tel dispositif est connu du US 2004/633776.

Afin de simplifier la conception de l'installation de diffusion d'air et de réduire la proportion de la surface de la planche de bord consacrée à cette fonction, il serait souhaitable de pouvoir réaliser ces fonctions au moyen des mêmes classes d'éléments. Une telle solution a déjà été proposée dans le document US-A-2004/0063397, sous la forme d'un aérateur constitué d'un cylindre creux présentant une première grille directionnelle sur une moitié de sa surface et une grille de diffusion sur l'autre moitié de sa surface. Une commande manuelle est à la disposition de l'utilisateur, qui peut choisir entre une diffusion directe et une diffusion indirecte de l'air sans position intermédiaire. Dans cette réalisation, le flux d'air subit un tournant à angle droit entre le flux amont et le flux aval, ce qui est défavorable en termes d'aéraulique et d'acoustique. De plus, le montage du dispositif dans la planche de bord est complexe du fait de la présence d'un axe de rotation devant s'étendre de gauche à droite ou de haut en bas par rapport aux occupants du véhicule.

Le but de l'invention est de proposer un nouveau type d'aérateur pouvant à la fois assurer les deux fonctions de diffusion directe et indirecte de l'air de ventilation dans l'habitacle plus efficacement que ceux déjà connus.

A cet effet, l'invention a pour objet un aérateur de système de ventilation de l'habitacle d'un véhicule automobile, constituant la partie terminale d'un conduit d'air principal convoyant un flux d'air amont, ledit aérateur étant pourvu de moyens de diffusion pour convertir le flux d'air amont en un flux d'air aval de diffusion, de moyens directionnels pour convertir le flux d'air amont en un flux d'air aval directionnel, et de moyens de commande pour passer d'un mode de flux d'air aval à l'autre par la connexion des uns ou des autres des moyens de diffusion et des moyens directionnels audit conduit d'air principal, caractérisé en ce qu'il comporte un conduit central au moins partiellement coaxial à un conduit annulaire, les deux conduits ayant leurs extrémités amont connectées au conduit d'air principal et chacun ayant à son extrémité aval l'un desdits moyens de diffusion et desdits moyens directionnels, et une bague de commande pouvant être placée entre une première position où elle a pour fonction de fermer une connexion entre le conduit central et le conduit annulaire et une deuxième position où la bague a pour fonction d'ouvrir ladite connexion.

Il peut comporter également des moyens d'obturation du conduit central commandés par le déplacement de la bague.

Lesdits moyens d'obturation du conduit central peuvent être constitués par au moins un volet.

Dans une première variante de l'invention, une paroi commune cylindrique sépare le conduit central et le conduit annulaire, ladite paroi commune est pourvue de perforations selon une de ses circonférences, ladite bague est insérée autour de ladite paroi commune et porte des perforations pouvant, par rotation de la bague, jusqu'à au moins une position angulaire, venir en correspondance avec lesdites perforations de la paroi commune, ladite bague pouvant également, par rotation jusqu'à au moins une autre position angulaire, obturer lesdites perforations de la paroi commune.

Lesdits moyens de diffusion peuvent comporter une ou des perforations ménagées, à l'extrémité dudit conduit annulaire, dans la partie frontale de la bague destinée à faire saillie dans l'habitacle du véhicule lorsque l'aérateur est monté dans la planche de bord.

Dans une deuxième variante de l'invention, ladite bague constitue une paroi commune cylindrique séparant le conduit central et le conduit annulaire, il comporte des moyens permettant d'assurer une translation de la bague le long de son axe longitudinal simultanément à sa rotation pour faire passer la bague d'une position d'obturation du conduit annulaire à une position d'obturation du conduit central.

La partie frontale de la bague peut comporter sur sa périphérie une lèvre qui, lorsque la bague est en position de recul maximal, est destinée à venir au contact de la face externe de la planche de bord pour obturer le conduit annulaire, lorsque la bague est dans une position avancée, son extrémité arrière est éloignée de la paroi externe de l'aérateur de manière à autoriser le passage d'au moins une partie du flux d'air amont dans le conduit annulaire pour constituer le flux d'air de diffusion, et dans cette même position avancée, la lèvre est destinée à être éloignée de la planche de bord de manière à définir une ouverture annulaire par laquelle le flux d'air de diffusion peut pénétrer dans l'habitacle.

Lesdits moyens permettant d'assurer une translation de la bague simultanément à sa rotation peuvent comporter une ou des nervures hélicoïdales qui viennent s'insérer dans un ou des logements correspondants ménagés sur une pièce solidaire de la paroi externe de l'aérateur.

Lesdits moyens de diffusion peuvent comporter au moins une perforation ménagée sur au moins une portion de la paroi externe de l'aérateur, et par laquelle le flux d'air aval de diffusion pénètre dans l'habitacle.

Ils peuvent alors comporter un pavillon orientant dans l'habitacle le flux d'air aval de diffusion sortant de la perforation.

Ladite bague peut, de préférence, être maintenue dans au moins une position intermédiaire entre lesdites première et deuxième positions, de manière à autoriser simultanément le passage d'un flux aval d'air de diffusion et d'un flux d'air aval directionnel dans l'habitacle.

Comme on l'aura compris, l'aérateur selon l'invention comporte deux conduits coaxiaux connectés chacun au conduit d'air principal. L'un porte à son extrémité aval les moyens de diffusion directe, et l'autre porte à son extrémité aval les moyens de diffusion indirecte. Une bague commandable par l'utilisateur permet à celui-ci de choisir aisément l'un ou l'autre des deux types de diffusion de l'air par l'aérateur concerné, ainsi que, de préférence, différents compromis entre ces deux types de diffusion. L'aérateur selon l'invention est de conception simple et est donc peu coûteux à fabriquer.

L'invention sera mieux comprise à la lecture de la description qui suit, donnée en référence aux figures annexées suivantes :
- la figure 1 qui représente en coupe longitudinale un premier exemple d'aérateur selon l'invention, en position de diffusion directe (fig.1a) et en position de diffusion indirecte (fig.1b) ;
- la figure 2 qui représente en coupe longitudinale un deuxième exemple d'aérateur selon l'invention, en position de diffusion directe (fig.2a) et en position de diffusion indirecte (fig.2b) ;
- la figure 3 qui représente en coupe longitudinale un troisième exemple d'aérateur selon l'invention en position de diffusion directe.

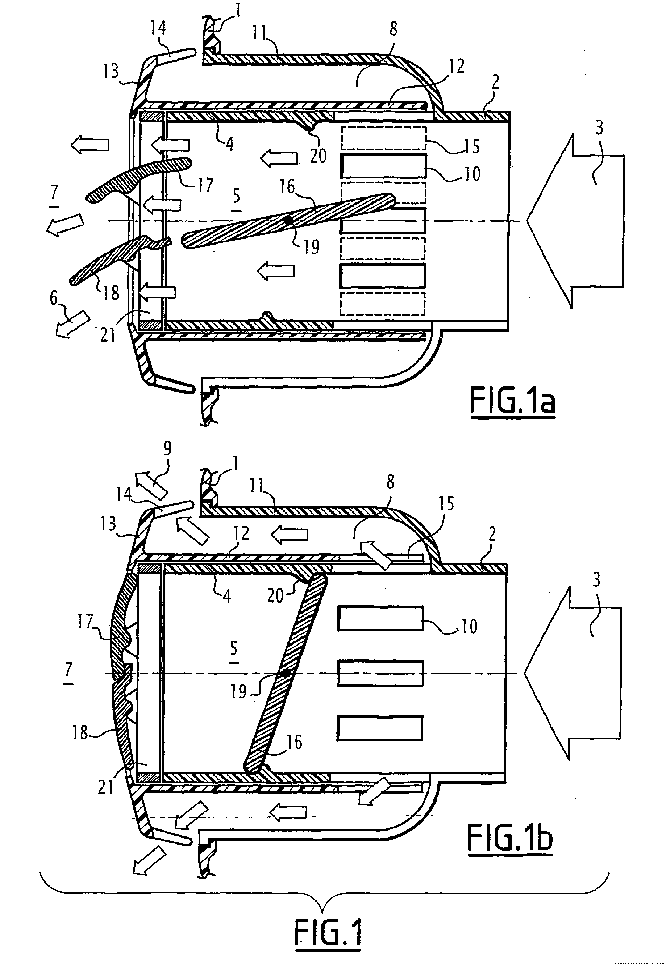

Un premier exemple d'aérateur selon l'invention, représenté sur la figure 1, est destiné à être encastré dans un orifice ménagé dans la planche de bord 1 du véhicule et à être connecté, par son extrémité amont, dans une zone de connexion 2 à un conduit d'air principal (non représenté), lui-même relié à l'installation de chauffage, ventilation et climatisation du véhicule. Le conduit d'air principal amène à l'aérateur un flux d'air amont symbolisé par la flèche 3.

En aval de la zone de connexion 2, l'aérateur comporte deux conduits coaxiaux de sections circulaires, séparés par une paroi commune 4 cylindrique. Le conduit central 5 est dédié au passage d'un flux d'air aval directionnel, symbolisé par les flèches 6, dans l'habitacle 7 du véhicule. Le conduit annulaire 8 est dédié au passage d'un flux d'air aval de diffusion symbolisé par les flèches 9.

La paroi commune 4 séparant les deux conduits 5, 8 est pourvue de perforations 10 espacées, situées dans sa partie amont et disposées selon une circonférence de ladite paroi commune 4.

Le conduit annulaire 8 est défini d'une part par la paroi externe 11 de l'aérateur, et d'autre part par une bague cylindrique 12 insérée autour de la paroi commune 4 et pouvant tourner autour de son axe longitudinal. La partie frontale 13 de cette bague 12, qui fait saillie dans l'habitacle 7, porte une série de perforations 14 réparties sur sa périphérie (ou une perforation unique s'étendant sur tout ou partie de cette périphérie) par lesquelles le flux d'air aval de diffusion 9 pénètre dans l'habitacle, avec un orientation très nettement divergente par rapport à l'axe longitudinal de l'aérateur pour ne pas être dirigé vers les occupants du véhicule. La paroi de la bague 12 porte des perforations 15 espacées qui, lorsque la bague 12 est insérée dans l'aérateur, peuvent venir en correspondance avec les perforations 10 de la paroi commune 4 si la bague 12 est tournée par l'utilisateur (ou un dispositif à commande automatique) d'un angle adéquat.

Lorsque cette correspondance est exactement réalisée (cas de la figure 1b), le flux d'air amont 3 a la possibilité de passer dans le conduit annulaire 8 à travers les perforations 10, 15, notamment si par ailleurs le conduit central 5 est obturé.

Inversement, il doit exister une ou des positions angulaires possibles pour la bague 12 dans la ou lesquelles il n'y a pas de recouvrement entre les perforations 10 de la paroi commune 4 et 15 de la bague 12 (cas de la figure 1a). Dans ces conditions, les perforations 10 de la paroi commune 4 sont obturées, et l'intégralité du flux d'air amont 3 passe dans le conduit central 5.

A cet effet, la rotation de la bague 12 commande également le déplacement d'une série de volets 16 (volet central) 17, 18 (volets frontaux).

Le volet central 16 est disposé à l'intérieur du conduit central 5 et peut tourner autour d'un axe 19 qui, dans l'exemple représenté, est situé sensiblement sur l'axe longitudinal de l'aérateur et lui est perpendiculaire. L'axe 19 est également situé en aval des perforations 10 de la paroi commune 4. Lorsque la bague 12 est dans sa position commandant la seule restitution d'un flux d'air directionnel 6 (figure 1a), le volet central 16 est dans une position sensiblement alignée sur l'axe longitudinal de l'aérateur et ne gène donc pas la sortie du flux d'air directionnel 6. Inversement, lorsque la bague 12 est dans sa position commandant la seule restitution d'un flux d'air de diffusion 9 (figure 1b), le volet central 16 est dans une position pratiquement perpendiculaire à l'axe longitudinal de l'aérateur et vient en butée contre un renflement annulaire 20 ménagé sur la paroi commune 4. De cette façon, il obture sensiblement le conduit central 5 en aval des perforations 10, et comme les séries des perforations 10, 15 sont en correspondance l'une avec l'autre, tout le flux d'air amont 3 les traverse pour aller dans le conduit annulaire 8 et en sortir par les perforations 14.

Les volets frontaux 17, 18 situés à l'extrémité aval du conduit central 5 sont supportés par une bague 21. Ils peuvent, de même, tourner autour d'axes sensiblement perpendiculaires à l'axe longitudinal de l'aérateur. Lorsqu'ils sont en position ouverte maximale (figure 1 a) ils ne gênent pas la sortie du flux d'air directionnel 6 et contribuent à son orientation. Lorsqu'ils sont en position fermée (fig.1b) ils contribuent à l'obturation du conduit central 5, par exemple en venant chacun en butée d'une part contre la périphérie du conduit central 5 et/ou d'autre part contre un côté de l'autre volet frontal 17, 18 (cas représenté sur la figure 1 b).

De préférence, la bague 12 et les volets 16, 17, 18 peuvent, à la demande de l'utilisateur, prendre une ou plusieurs positions intermédiaires, préréglées ou non, voire pouvoir passer de façon continûment progressive, entre les deux positions extrêmes qui ont été décrites et représentées. On peut ainsi moduler de façon plus ou moins fine les proportions respectives d'air aval directionnel 6 et d'air aval de diffusion 9. Ces positions intermédiaires pourraient être préréglées au moyen, par exemple, d'un crantage ménagé sur la périphérie de la bague 12.

Il doit être entendu qu'il n'est pas indispensable dans l'esprit de l'invention de prévoir à la fois un volet central 16 et des volets frontaux 17, 18, l'essentiel étant qu'il existe au moins un volet (ou un quelconque dispositif fonctionnellement équivalent) qui puisse assurer à la demande de l'utilisateur l'obturation sensiblement totale du conduit central 5 par rotation de la bague 12. Un volet unique similaire au volet 16 mais situé dans la partie frontale de l'aérateur pourrait, par exemple, être utilisé, en particulier si l'orientation précise du flux d'air aval directionnel 6 était assuré par d'autres moyens indépendants.

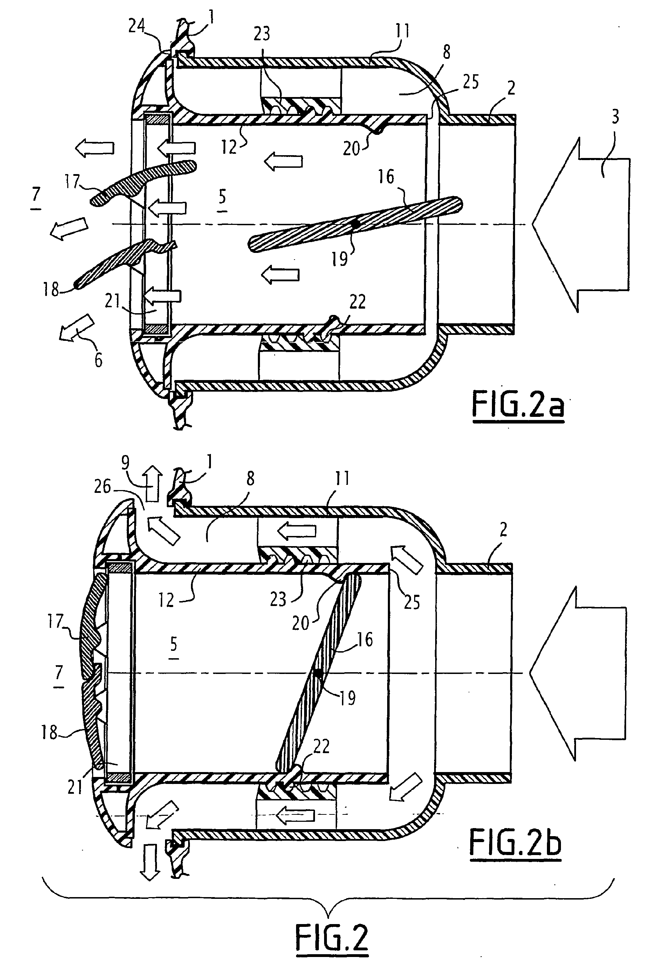

Un deuxième exemple d'aérateur selon l'invention est représenté sur la figure 2. Les éléments communs avec l'exemple de la figure 1 sont repérés par les mêmes références numériques.

Dans cet exemple, c'est la bague 12 elle-même qui constitue la paroi commune aux deux conduits 5, 8. D'autre part, elle comporte, sur sa face tournée vers la paroi externe 11 de l'aérateur, une ou des nervures hélicoïdales 22 qui viennent s'insérer dans un ou des logements 23 correspondants ménagés sur une pièce solidaire de la paroi externe 11. De cette façon, une rotation appliquée à la bague 12 permet, selon son sens, de la faire avancer en direction de l'habitacle 7 ou de la faire reculer en direction de la planche de bord 1. Tout autre moyen équivalent permettant d'assurer une translation de la bague 12 simultanément à sa rotation serait également utilisable.

La partie frontale de la bague 12 comporte sur toute sa périphérie une lèvre 24 qui, lorsque la bague 12 est en position de recul maximal (cas de la figure 2a), vient au contact de la face externe de la planche de bord 1. Dans cette position, la lèvre 24 obture donc totalement le conduit annulaire 8. Comme, simultanément, les volets 16, 17, 18 sont dans leurs positions respectives d'ouverture maximale, l'intégralité du flux d'air amont 3 est convertie en flux d'air aval directionnel 6 en sortant du conduit central 5. Pour réaliser l'obturation du conduit annulaire 8, on peut, en plus ou à la place de la lèvre 24, prévoir que dans cette position, l'extrémité arrière 25 de la bague 12 vienne au contact de la paroi externe 11 de l'aérateur.

Inversement, lorsque la bague 12 est en position avancée (cas de la figure 2b), la lèvre 24 est située à l'écart de la planche de bord 1 et ménage donc une ouverture annulaire 26. Comme, également, l'extrémité arrière 25 de la bague 12 est éloignée de la paroi externe 11, le flux d'air amont 3 a la possibilité de pénétrer dans le conduit annulaire 8 et d'en sortir par l'ouverture 26. Parallèlement, les volets 16, 17, 18 sont tous en position fermée (les portées 20 sur lesquelles le volet central 16 vient en appui sont ici ménagées sur la bague 12), obturant ainsi le conduit central 5. C'est donc l'intégralité du flux d'air amont 3 qui est convertie en flux d'air aval de diffusion 9.

Là encore, de préférence, une ou des positions intermédiaires entre celles décrites et représentées peuvent être sélectionnables par l'utilisateur.

En variante, on pourrait imaginer d'autres configurations pour la bague 12, l'essentiel étant, dans ce mode de mise en oeuvre de l'invention, que le passage d'un mode de fonctionnement à l'autre, s'effectue par une translation et une rotation combinées de la bague 12.

L'axe de rotation de la bague 12 pouvant être confondu avec l'axe longitudinal de l'aérateur, l'installation de l'aérateur dans la planche de bord 1 ne pose pas de problèmes particuliers.

Dans l'exemple décrit et représenté, le conduit annulaire 8 s'étend sur l'ensemble de la périphérie du conduit centra 5, mais cette caractéristique n'est pas obligatoire : le conduit annulaire 8 peut ne s'étendre que sur une partie de cette périphérie.

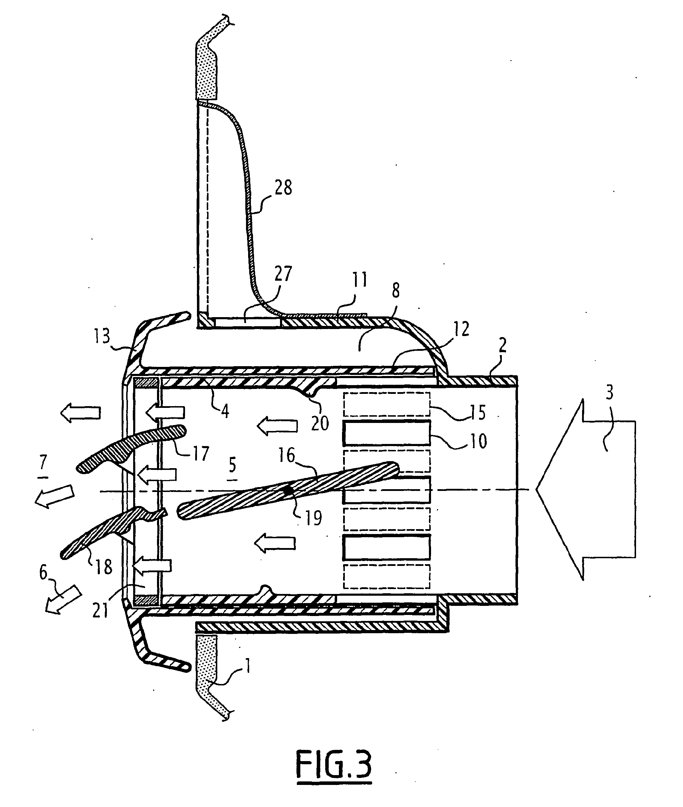

L'exemple d'aérateur selon l'invention représenté sur la figure 3 présente cette caractéristique. Il est comparable, dans sa conception générale, à celui de la figure 1, en ce que la bague 12 est insérée autour de la paroi commune 4 des deux conduits central 5 et annulaire 8 et effectue lors de ses mouvements une rotation pure, sans translation. Il s'en distingue sur les points suivants :
- le conduit annulaire 8 ne s'étend que sur une portion (par exemple, comme représenté, la moitié supérieure) de la périphérie de l'aérateur : on voit sur la figure 3 que dans la partie inférieure de l'aérateur, la bague 12 est emprisonnée entre la paroi commune 4 et la paroi externe 11 avec un simple jeu fonctionnel autorisant sa rotation ;
- le flux d'air aval de diffusion 9 peut s'échapper du conduit annulaire 8 par une perforation unique 27 s'étendant sur la périphérie du conduit annulaire 8 (ou une pluralité de telles perforations réparties sur la périphérie du conduit annulaire 8) ; celle-ci est ménagée non plus sur la bague 12 mais sur la paroi externe 11 ; le flux d'air aval de diffusion est orienté dans l'habitacle 7 par un pavillon 28 fixé sur ou intégré à la paroi externe 11 et encastrable dans la planche de bord 1 ; il serait également envisageable que ces caractéristiques (perforation(s) 27 ménagée(s) sur la paroi externe 11 et pavillon 28 rabattant le flux d'air aval de diffusion 9 dans l'habitacle 7) soient adaptées au cas où le conduit annulaire 8 s'étend sur toute la périphérie de l'aérateur.

Dans les exemples représentés, le volet central 16 et les volets frontaux 17, 18 peuvent être actionnés de manière synchronisée au moyen de biellettes, de telle sorte qu'une action sur l'un des volets 16, 17, 18 se répercute sur les autres. De préférence, également, une liaison à biellettes sphériques permet de faire tourner la bague 21 supportant les volets frontaux 17, 18 autour de l'axe longitudinal de l'aérateur indépendamment du volet central 16, de manière à orienter le flux d'air aval directionnel 6 comme l'utilisateur le souhaite.

La rotation du volet central 16 autour de l'axe 19 lorsque l'on actionne la bague de commande 12 peut se faire par un système à crémaillère et engrenage, se déplaçant l'un par rapport à l'autre lorsque l'on actionne la bague de commande 12. Par exemple, lorsque le volet central 16 est embarqué sur la bague de commande 12, l'axe 19 comprend un engrenage solidaire du volet central 16, et la crémaillère est portée par une partie fixe de l'aérateur. Dans le cas où le volet central 16 est embarqué sur une partie fixe de l'aérateur, alors la crémaillère est montée sur la bague de commande. La forme de la crémaillère est adaptée à la rotation pure (cas de la figure 1) ou hélicoïdale (cas de la figure 2) de la bague de commande 12.

Ces exemples de configurations des moyens de commande des mouvements des volets 16, 17, 18 sont connus en eux-mêmes.

## Revendications

1. Aérateur de système de ventilation de l'habitacle (7) d'un véhicule automobile, constituant la partie terminale d'un conduit d'air principal convoyant un flux d'air amont (3), ledit aérateur étant pourvu de moyens de diffusion pour convertir le flux d'air amont (3) en un flux d'air aval de diffusion (9), de moyens directionnels pour convertir le flux d'air amont en un flux d'air aval directionnel (6), et de moyens de commande pour passer d'un mode de flux d'air aval à l'autre par la connexion des uns ou des autres des moyens de diffusion et des moyens directionnels audit conduit d'air principal, **caractérisé en ce qu'**il comporte un conduit central (5) au moins partiellement coaxial à un conduit annulaire (8), les deux conduits (5, 8) ayant leurs extrémités amont (2) connectées au conduit d'air principal et chacun ayant à son extrémité aval l'un desdits moyens de diffusion et desdits moyens directionnels, et une bague de commande (12) pouvant être placée entre une première position où elle a pour fonction de fermer une connexion entre le conduit central (5) et le conduit annulaire (8) et une deuxième position où la bague (12) a pour fonction d'ouvrir ladite connexion.

2. Aérateur selon la revendication 1, **caractérisé en ce qu'**il comporte également des moyens d'obturation du conduit central (5) commandés par le déplacement de la bague (12).

3. Aérateur selon la revendication 2, **caractérisé en ce que** lesdits moyens d'obturation du conduit central (5) sont constitués par au moins un volet (16, 17, 18).

4. Aérateur selon l'une des revendications 1 à 3, **caractérisé en ce qu'**une paroi commune (4) cylindrique sépare le conduit central (5) et le conduit annulaire (8), **en ce que** ladite paroi commune (4) est pourvue de perforations (10) selon une de ses circonférences, et **en ce que** ladite bague (12) est insérée autour de ladite paroi commune (4) et porte des perforations (15) pouvant, par rotation de la bague (12), jusqu'à au moins une position angulaire, venir en correspondance avec lesdites perforations (10) de la paroi commune (4), ladite bague (12) pouvant également, par rotation jusqu'à au moins une autre position angulaire, obturer lesdites perforations (10) de la paroi commune (4).

5. Aérateur selon la revendication 4, **caractérisé en ce que** lesdits moyens de diffusion comportent une ou des perforations (14) ménagées, à l'extrémité dudit conduit annulaire (8), dans la partie frontale (13) de la bague (12) destinée à faire saillie dans l'habitacle (7) du véhicule lorsque l'aérateur est monté dans la planche de bord (1).

6. Aérateur selon l'une des revendications 1 à 3, **caractérisé en ce que** ladite bague (12) constitue une paroi commune cylindrique séparant le conduit central (5) et le conduit annulaire (8), **en ce qu'**il comporte des moyens permettant d'assurer une translation de la bague (12) le long de son axe longitudinal simultanément à sa rotation pour faire passer la bague (12) d'une position d'obturation du conduit annulaire (8) à une position d'obturation du conduit central (5).

7. Aérateur selon la revendication 6, **caractérisé en ce que** la partie frontale de la bague (12) comporte sur sa périphérie une lèvre (24) qui, lorsque la bague (12) est en position de recul maximal, est destinée à venir au contact de la face externe de la planche de bord (1) pour obturer le conduit annulaire (8), **en ce que**, lorsque la bague (12) est dans une position avancée, son extrémité arrière (25) est éloignée de la paroi externe (11) de l'aérateur de manière à autoriser le passage d'au moins une partie du flux d'air amont (3) dans le conduit annulaire (8) pour constituer le flux d'air de diffusion (9), et **en ce que** dans cette même position avancée, la lèvre (24) est destinée à être éloignée de la planche de bord (1) de manière à définir une ouverture annulaire (26) par laquelle le flux d'air de diffusion (9) peut pénétrer dans l'habitacle (7).

8. Aérateur selon la revendication 6 ou 7, **caractérisé en ce que** lesdits moyens permettant d'assurer une translation de la bague (12) simultanément à sa rotation comportent une ou des nervures hélicoïdales (22) qui viennent s'insérer dans un ou des logements correspondants (23) ménagés sur une pièce solidaire de la paroi externe (11) de l'aérateur.

9. Aérateur selon la revendication 4, **caractérisé en ce que** lesdits moyens de diffusion comportent au moins une perforation (27) ménagée sur au moins une portion de la paroi externe (11) de l'aérateur, et par laquelle le flux d'air aval de diffusion (9) pénètre dans l'habitacle (7).

10. Aérateur selon la revendication 9, **caractérisé en ce qu'**il comporte un pavillon (28) orientant dans l'habitacle (7) le flux d'air aval de diffusion (9) sortant de la perforation (27).

11. Aérateur selon l'une des revendications 1 à 10, **caractérisé en ce que** ladite bague (12) peut être maintenue dans au moins une position intermédiaire entre lesdites première et deuxième positions, de manière à autoriser simultanément le passage d'un flux aval d'air de diffusion (9) et d'un flux d'air aval directionnel (6) dans l'habitacle (7).

## Claims

1. Ventilator of a motor vehicle passenger compartment (7) ventilation system, forming the end part of a principal air duct conveying an upstream air flow (3), the said ventilator being provided with means of diffusion for converting the upstream air flow (3) to a diffusion downstream air flow (9), directional means for converting the upstream air flow to a directional downstream air flow (6) and control means for passing from one downstream air flow mode to the other by the connection of either of the means of diffusion and of the directional means to the said principal air duct, **characterized in that** it comprises a central duct (5) at least partially coaxial with an annular duct (8), the two ducts (5, 8) having their upstream ends (2) connected to the principal air duct and each one having, at its downstream end, one of the said means of diffusion and of the said directional means and a control ring (12) capable of being placed between a first position where it has the function of closing a connection between the central duct (5) and the annular duct (8) and a second position where the ring (12) has the function of opening the said connection.

2. Ventilator according to Claim 1, **characterized in that** it also comprises means of closing the central duct (5), controlled by movement of the ring (12).

3. Ventilator according to Claim 2, **characterized in that** the said means of closing the central duct (5) are formed by at least one flap (16, 17, 18).

4. Ventilator according to one of Claims 1 to 3, **characterized in that** a cylindrical common wall (4) separates the central duct (5) from the annular duct (8), **in that** the said common wall (4) is provided with holes (10) along one of its circumferences and **in that** the said ring (12) is inserted around the said common wall (4) and has holes (15) capable - by rotation of the ring (12) to at least one angular position - of becoming aligned with the said holes (10) in the common wall (4), the said ring (12) also being capable - by rotation to at least one other angular position - of closing the said holes (10) in the common wall (4).

5. Ventilator according to Claim 4, **characterized in that** the said means of diffusion comprise a or some holes (14) formed, at the end of the said annular duct (8), in the front part (13) of the ring (12) intended to protrude into the vehicle passenger compartment (7) when the ventilator is fitted in the dashboard (1).

6. Ventilator according to one of Claims 1 to 3, **characterized in that** the said ring (12) forms a cylindrical common wall separating the central duct (5) from the annular duct (8), **in that** it comprises means with which the ring (12) can be moved with translational motion along its longitudinal axis at the same time as it is rotated to move the ring (12) from a position of annular duct (8) closure to a position of central duct (5) closure.

7. Ventilator according to Claim 6, **characterized in that** the front part of the ring (12) comprises on its periphery a lip (24) which, when the ring (12) is in the maximum retraction position, is intended to come into contact with the external face of the dashboard (1) to close the annular duct (8), **in that**, when the ring (12) is in a forward position, its rear end (25) is far away from the ventilator external wall (11) so as to allow at least part of the upstream air flow (3) to pass into the annular duct (8) to form the diffusion air flow (9) and **in that**, in this same forward position, the lip (24) is intended to be far away from the dashboard (1) so as to define an annular opening (26) through which the diffusion air flow (9) can enter the passenger compartment (7).

8. Ventilator according to Claim 6 or 7, **characterized in that** the said means by which the ring (12) can be moved with translational motion at the same time as it can rotate comprise a or some helical ribs (22) which become inserted in a or some corresponding recesses (23) formed in a part rigidly locked with the ventilator external wall (11).

9. Ventilator according to Claim 4, **characterized in that** the said means of diffusion comprise at least one hole (27) formed in at least one portion of the ventilator external wall (11) and via which the diffusion downstream air flow (9) enters the passenger compartment (7).

10. Ventilator according to Claim 9, **characterized in that** it comprises a mouth (28) guiding the diffusion downstream air flow (9) coming out of the hole (27) into the passenger compartment (7).

11. Ventilator according to one of Claims 1 to 10, **characterized in that** the said ring (12) can be held in at least one intermediate position between the said first and second positions, so as to allow a diffusion air downstream flow (9) and a directional downstream air flow (6) into the passenger compartment (7) at the same time.

## Patentansprüche

1. Lüfter für ein System zur Belüftung des Karosseriegehäuses (7) eines Kraftfahrzeugs, der den Endteil einer einen Eingangsluftstrom (3) befördernden Hauptluftleitung bildet, wobei der Lüfter mit Zerstreuungsmitteln zur Umwandlung des Eingangsluftstroms (3) in einen zerstreuten Ausgangsluftstrom (9), mit Richtmitteln zur Umwandlung des Eingangsluftstroms in einen gerichteten Ausgangsluftstrom (6) und mit Steuermitteln zum Übergang von einem Ausgangsluftstrommodus zum anderen durch Verbindung der einen oder der anderen der Zerstreuungsmittel und der Richtmittel mit der Hauptluftleitung versehen ist, **dadurch gekennzeichnet, dass** er eine zentrale Leitung (5) umfasst, die mindestens teilweise zu einer ringförmigen Leitung (8) koaxial ist, wobei die eingangsseitigen Enden (2) der beiden Leitungen (5, 18) mit der Hauptluftleitung verbunden sind und jede an ihrem ausgangsseitigen Ende eines der Zerstreuungsmittel und der Richtmittel aufweist, und ein Steuerring (12) zwischen einer ersten Stellung, in der er die Funktion hat, eine Verbindung zwischen der zentralen Leitung (5) und der ringförmigen Leitung (8) zu verschließen, und einer zweiten Stellung platziert werden kann, in der der Ring (12) die Funktion hat, diese Verbindung zu öffnen.

2. Lüfter nach Anspruch 1, **dadurch gekennzeichnet, dass** er ferner Mittel zum Verschließen der zentralen Leitung (5) umfasst, die durch die Bewegung des Rings (12) gesteuert werden.

3. Lüfter nach Anspruch 2, **dadurch gekennzeichnet, dass** die Mittel zum Verschließen der zentralen Leitung (5) aus mindestens einer Klappe (16, 17, 18) bestehen.

4. Lüfter nach einem der Ansprüche 1 bis 3, **dadurch gekennzeichnet, dass** eine gemeinsame zylindrische Wand (4) die zentrale Leitung (5) und die ringförmige Leitung (8) trennt, dass diese gemeinsame Wand (4) auf einem ihrer Kreisumfänge mit Öffnungen (10) versehen ist und dass der Ring (12) auf diese gemeinsame Wand (4) aufgesteckt ist und Öffnungen (15) aufweist, die durch Drehen des Rings (12) bis in mindestens eine Winkelstellung mit den Öffnungen (10) der gemeinsamen Wand (4) in Übereinstimmung kommen können, wobei der Ring (12) auch durch Drehen bis in mindestens eine andere Winkelstellung die Öffnungen (10) der gemeinsamen Wand (4) verschließen kann.

5. Lüfter nach Anspruch 4, **dadurch gekennzeichnet, dass** die Zerstreuungsmittel eine oder mehrere Öffnungen (14) umfassen, die am Ende der ringförmigen Leitung (8) in dem Frontteil (13) des Rings (12) vorgesehen sind, der dazu bestimmt ist, im Karosseriegehäuse (7) des Fahrzeugs hervorzustehen, wenn der Lüfter in dem Armaturenbrett (1) montiert ist.

6. Lüfter nach einem der Ansprüche 1 bis 3, **dadurch gekennzeichnet, dass** der Ring (12) eine gemeinsame zylindrische Wand bildet, die die zentrale Leitung (5) und die ringförmige Leitung (8) trennt, dass er Mittel umfasst, die eine Translation des Rings (12) längs seiner Längsachse gleichzeitig mit seiner Drehung gestatten, um den Ring (12) von einer Stellung der Verschließung der ringförmigen Leitung (8) in eine Stellung der Verschließung der zentralen Leitung (5) übergehen zu lassen.

7. Lüfter nach Anspruch 6, **dadurch gekennzeichnet, dass** der Frontteil des Rings (12) auf seinem Umfang eine Lippe (24) umfasst, die, wenn der Ring (12) in maximal zurückgesetzter Stellung ist, dazu bestimmt ist, mit der Außenseite des Armaturenbretts (1) in Kontakt zu kommen, um die ringförmige Leitung (8) zu verschließen, dass, wenn der Ring (12) in einer vorgeschobenen Stellung ist, sein hinteres Ende (25) von der Außenwand (11) des Lüfters entfernt ist, so dass der Durchgang mindestens eines Teils des Eingangsluftstroms (3) in die ringförmige Leitung (8) zugelassen wird, um den zerstreuten Luftstrom (9) zu bilden, und dass in dieser selben vorgeschobenen Stellung die Lippe (24) dazu bestimmt ist, von dem Armaturenbrett (1) entfernt zu sein, so dass eine ringförmige Öffnung (26) gebildet wird, über die der zerstreute Luftstrom (9) in das Karosseriegehäuse (7) eintreten kann.

8. Lüfter nach Anspruch 6 oder 7, **dadurch gekennzeichnet, dass** die Mittel, die eine Translation des Rings (12) gleichzeitig mit seiner Drehung gestatten, eine oder mehrere schraubenförmige Rippen (22) umfassen, die in eine oder mehrere entsprechende Aussparungen (23) eintreten, die an einem mit der Außenwand (11) des Lüfters fest verbundenen Teil vorgesehen sind.

9. Lüfter nach Anspruch 4, **dadurch gekennzeichnet, dass** die Zerstreuungsmittel mindestens eine Öffnung (27) umfassen, die auf mindestens einem Abschnitt der Außenwand (11) des Lüfters vorgesehen ist und über die der zerstreute Ausgangsluftstrom (9) in das Karosseriegehäuse (7) eintritt.

10. Lüfter nach Anspruch 9, **dadurch gekennzeichnet, dass** er eine Muschel (28) umfasst, die den aus der Öffnung (27) austretenden zerstreuten Ausgangsluftstrom (9) in das Karosseriegehäuse (7) richtet.

11. Lüfter nach einem der Ansprüche 1 bis 10, **dadurch gekennzeichnet, dass** der Ring (12) in mindestens einer Zwischenstellung zwischen der ersten und der zweiten Stellung gehalten werden kann, so dass gleichzeitig der Durchgang eines zerstreuten Ausgangsluftstroms (9) und eines gerichteten Ausgangsluftstroms (6) in das Karosseriegehäuse (7) zugelassen wird.
